# EUROPEAN PATENT APPLICATION

(11) **EP 3 549 434 A1**
(43) Date of publication of application: **09.10.2019**
(21) Application number: 19167332.6
(22) Date of filing: 04.04.2019
(51) Int. Cl.: A01D 45/16

(54) **AUTOMATIC HYBRID SELF-PROPELLED MACHINE FOR HARVESTING TOBACCO LEAVES**

(30) Priority: 05.04.2018 IT 201800002303 U
(71) Applicant: Spapperi, Aldo, 06012 Citta' di Castello (PG) (IT)
(72) Inventor: Spapperi, Aldo, 06012 Citta' di Castello (PG) (IT)
(74) Representative: Romano, Giuseppe

(57) **Abstract**

A hybrid harvesting machine, intended to be used in agriculture for harvesting tobacco leaves, having the possibility of being able to have in one single machine all devices suitable for harvesting both basal, median or apical leaves and for activating quickly and separately the operation thereof, characterized by electro-thermal propulsion, with all derived advantages, less consumption, more power by using smaller engines and - fundamental element - fewer problems in meeting the parameters on emissions, with all consequent advantages.

## Description

### DESCRIPTION

The tobacco cultivation takes place by organizing the installation of plants in rows with variable distances between the rows and between the plants in the row depending upon the agricultural areas and the tobacco type, the harvesting of leaves, which are the useful portion of the plant, both it is made manually and with the help of suitable machines, takes place by detaching from the plant, starting from the bottom to the top, the leaves reaching maturity sequentially, subsequently the leaves once harvested are transported to the various working centres to be subjected to the drying step.

The agricultural machines' market nowadays makes available several machines intended to a mechanized harvesting of tobacco leaves which can provide for all harvesting steps, starting from the basal (lower) leaves, then in other harvesting subsequent to the harvesting of median leaves, and at last the apical leaves, the last leaves to be harvested. In order to do this harvesting, each time the two relative defoliators suitable for the harvesting which one wants to perform, have to be mounted alternatively, with considerable time losses. For replacing one or the other type of defoliator there is always the risk of losing hydraulic oil and, considering that these procedures are carried out on the field there is the real risk of polluting the ground. In order to lower the production costs, the farmers tend to decrease the harvesting steps, by leaving more and more leaves for the last step, always searching for a compromise with quality, but which requires quick harvesting time which not always is possible with the current machines, maybe because the machine is configured with defoliators for a determined harvesting for a given piece of land, whereas the one at short distance requires another type of defoliator. Many farmers to address this problem are constrained to purchase several machines with mounted dedicated defoliators for the various harvesting.

All above-mentioned drawbacks and limitations are overcome with the harvesting machine intended to be used in agriculture for harvesting tobacco leaves, characterized in that it carries always mounted aboard the two harvesting devices and particular systems allow the use of one or the other one or both of them with immediate configuration change time. Then, one single machine which can pass from one field to another one having tobacco with different ripening, having always ready the defoliators most suitable to the harvesting which it is going to perform. Moreover, such machine combines to the traditional internal combustion engine a main electric motor and other electric motors applied directly to the various users, fed by battery groups with suitable capacity, the recharge thereof will be obviously assigned, during stop hours, to the connection to the power supply network, if available, but it will be also possible aboard thanks to the generator and to a considerable group of photovoltaic panels mounted on the upper portion of the machine, by forming a roof which obviously has also the function of protecting the underlying devices from the atmospheric agents. The present invention relates to all above-mentioned peculiarities with all consequent advantages.

The present invention, by overcoming the problems of known art, involves several and evident advantages which, together with the features and the use modes, will result evident from the following detailed description of preferred embodiments thereof, shown by way of example and not for limitative purposes.

The figures of the enclosed drawings will be referred to, wherein:
Figure 1 shows a perspective view of a three-wheeled harvesting machine;
Figure 2A shows a front view of the machine;
Figure 2B shows a rear view of the machine;

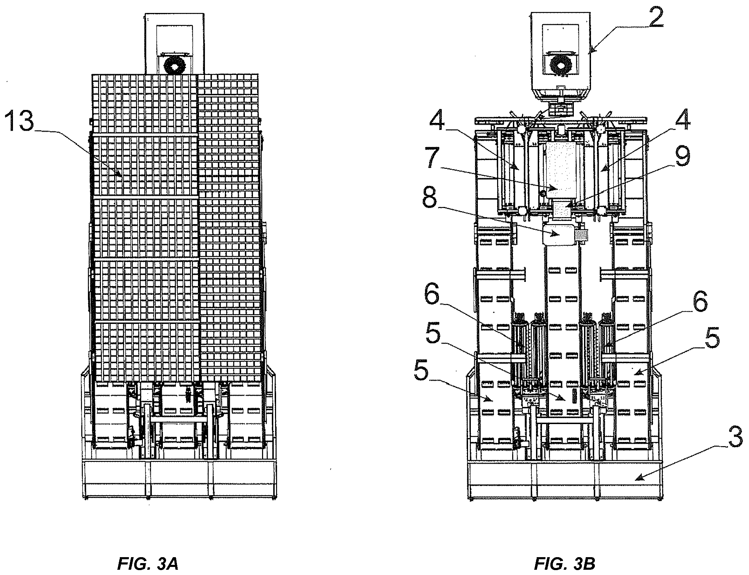

Figure 3A shows a sectioned plan view of the machine;
Figure 3B shows a normal plan view of the machine;

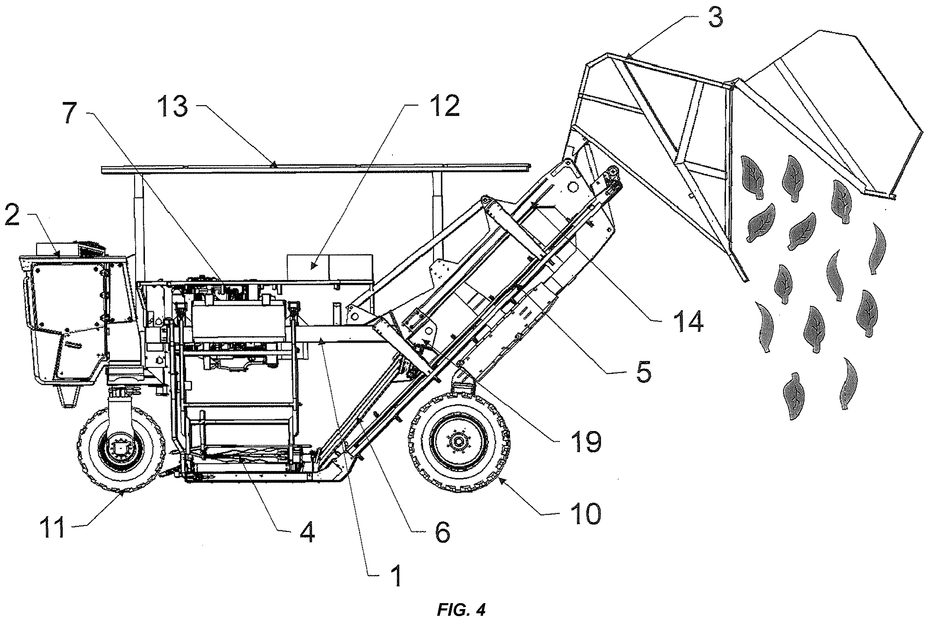

Figure 4 shows a side view of the machine during operation;

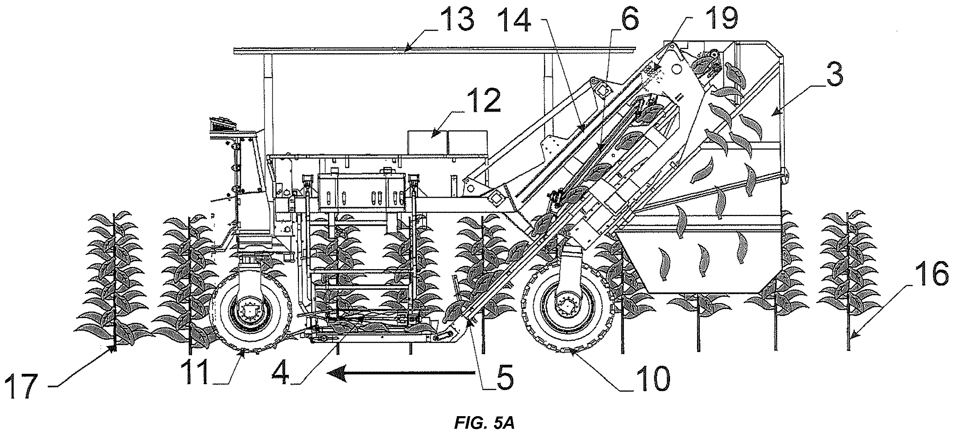

Figure 5A shows a side view of a machine during operation configured for harvesting basal and median leaves;

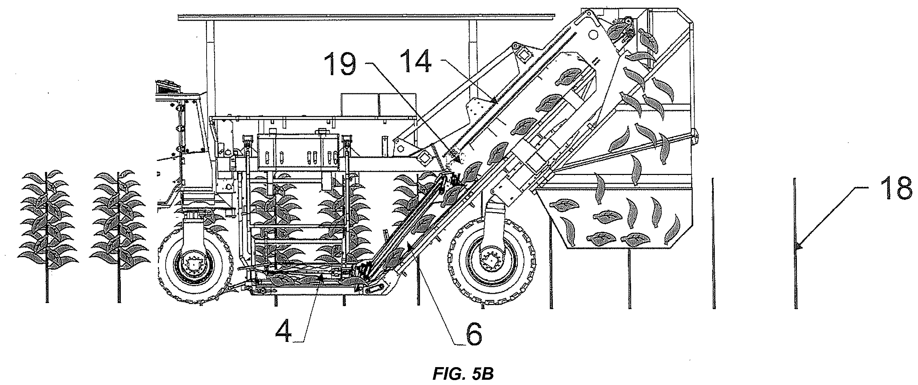

Figure 5B shows a side view of a machine during operation configured for harvesting the apical leaves;

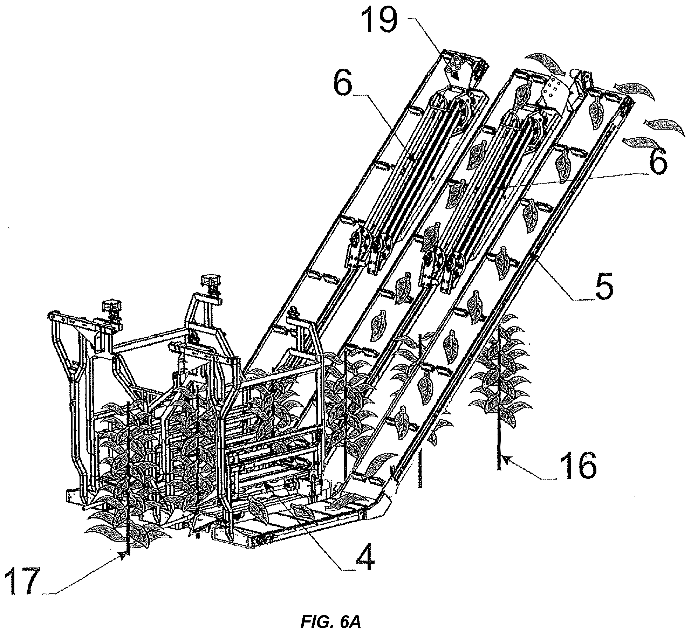

Figure 6A shows a perspective view of the belts, referred to a machine configured for harvesting the basal and median leaves;

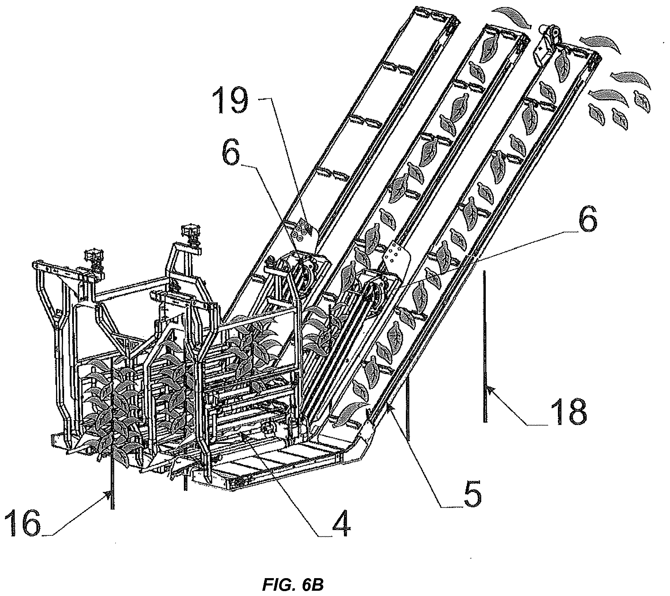

Figure 6B shows a perspective view of the belts, referred to a machine configured for harvesting the apical leaves;

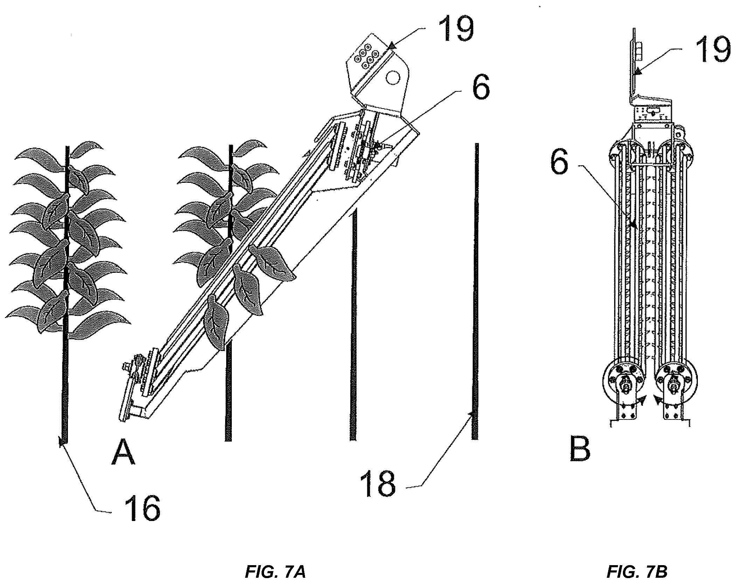

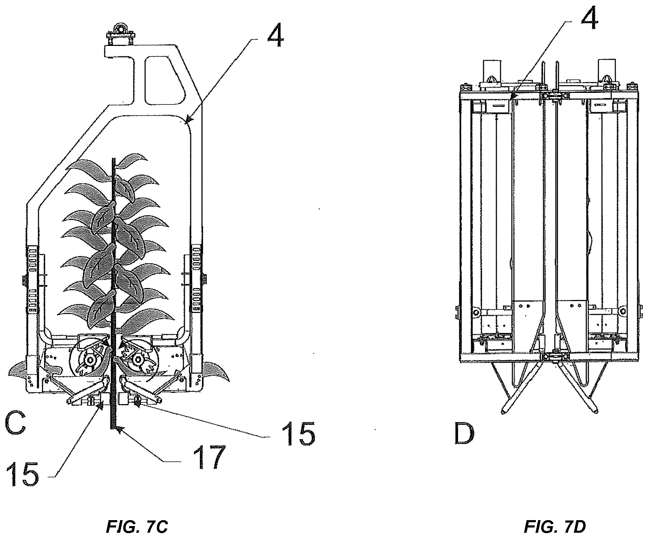

Figure 7A shows a side schematic view of the step for harvesting the apical leaves;
Figure 7B shows a front view of the knife defoliator;
Figure 7C and 7M show other views of a defoliator group.

The present invention will be described hereinafter by making reference to the above-mentioned figures.

With reference to the details of figures there are shown: the supporting frame (1), which in the preferred and not limitative exemplifying variant can be made of steel or aluminium, the cabin (2), the caisson (3) for harvesting the product, the defoliator groups (4) for detaching the basal and median leaves, the conveyor belts (5), the knife defoliators (6) for detaching the apical leaves, the thermal engine (7), the main electric motor (8), the current generator (9), the rear wheels (10), the front wheel or wheels (11), the battery modules (12), the photovoltaic panel covering roof (13), a guide (14) to allow the sliding of the knife defoliator (6).

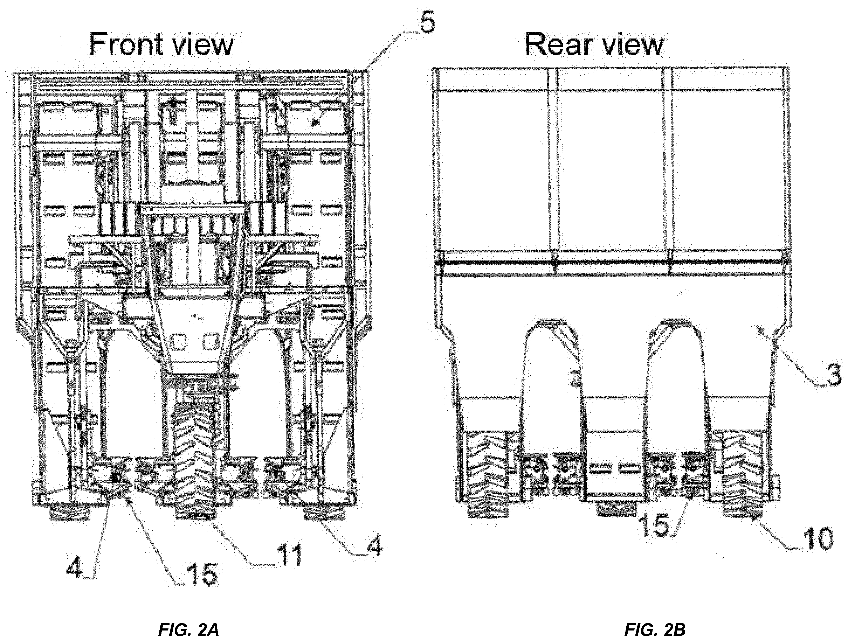

The operation of the invention can be so described: whereas the machine moves among the grooves of the tobacco plants (16) and acts for harvesting the first (basal) leaves, brushes (15) are used which anticipate the work of the real defoliator (4), and have the function of removing the "branciola" called leaves which usually are in contact with the ground and then very dirty, if said leaves are mixed with the above leaves, they create a low quality product, penalized by the market. With the application of these brushes or other device suitable to the purpose an optimum quality is obtained, and without additional costs, since such operation is performed contemporary to the harvesting of the first useful leaves (that is in the same passage). The subsequent passage among the plants (16) is performed for harvesting the so-called median leaves by using still the blade defoliator (4), and in these two harvesting steps the other defoliator (6) remains positioned upwards (Figure 2A) so as not to obstruct the passage of the plants during the machine advancement. On the contrary, when one wants to go on to the subsequent harvesting providing the removal of all leaves remained on the plant, the defoliator (6) is made to slide all down (Figure 2B) so that the rotation of the knives thereof it is made succeeds in detaching the leaves from the plant and to convey them in the conveyor belts which then will deposit them inside the caisson (3). It is to be noted that even the transportation of the leaves inside the caisson (contrary to all other machines) takes place without the help of fans, thanks to the particular shape of the caisson itself, and this allows to keep low the production costs and even an energy saving.

The operation system of the defoliators (4, 6) is known art whereas the novelty lies in that the two systems are assembled contemporarily in the same machine and they do not interfere therebetween and can also be used contemporarily, if required.

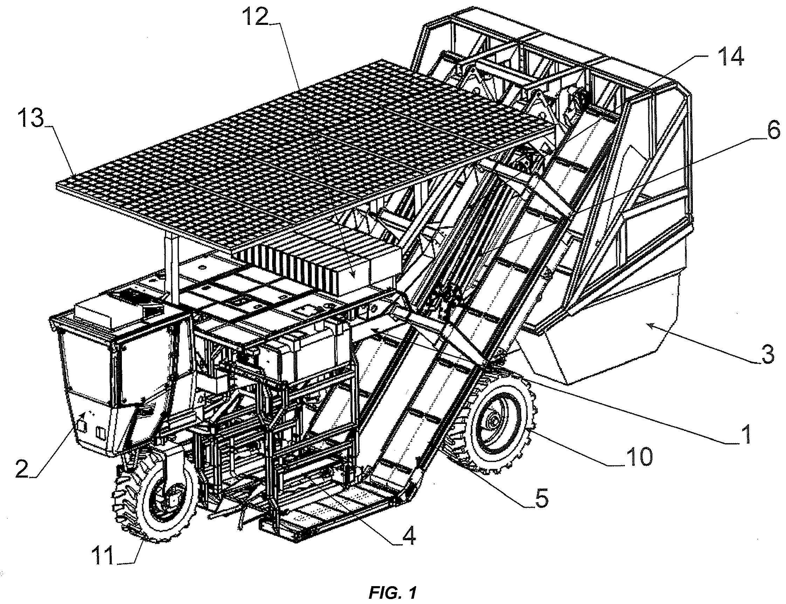

The machine as highlighted in (Figure 1) is provided with a hybrid motorization system, thermal engine (7), electric motor (8), generator (9), which interact to control the various users, and re-charge the battery group (12) together with the photovoltaic panels mounted on the roof (13). Considering that these machines normally are used only two or three months per year and having as cover a considerable number of photovoltaic panels and a considerable number of batteries, they can be surely used during the remaining period of the year for the production of electric energy by integrating with the network of houses, barns, etc.

## Claims

1. A hybrid self-propelled automatic machine for harvesting tobacco leaves, comprising a defoliator (6) which sliding on a suitable guide (14) can be brought all down when it has to harvest leaves or it can be wholly retracted when it has not to interfere with plants during the first harvesting.

2. The machine according to claim 1, wherein a defoliator (6) is always aboard the machine and it can be brought quickly in the working position without the need for performing connections and/or wiring, which in case of hydraulic plants involve even accidental leakages of polluting elements to the detriment of the underlying ground.

3. The machine according to claim 1 or 2, wherein a defoliator (6) is made to slide on any guide and with mechanical, electric, pneumatic device or of any other kind adapted to the purpose, in very short time without losing time, having also the possibility of making two defoliators (4, 6) to work at the same time.

4. The machine according to the preceding claims, wherein an electric motor and a generator for feeding the several working users are coupled to an internal combustion engine.

5. The machine according to claim 4, wherein a battery group can be recharged aboard by the photovoltaic roof (13), and by the generator (9), or externally by connection to the power supply network (if present) during stops.

6. The machine according to the preceding claims 4 or 5, wherein said machine can be used in the periods of non-use, as electric current generator at no cost and by connecting it to the home network.

7. The machine according to the preceding claims, wherein a particular shape of the harvesting caisson (3) and the positioning of the conveyor belts (5) allow a correct filling-in without having recourse to fans.
